# EUROPÄISCHE PATENTANMELDUNG

(11) **EP 2 530 639 A1**
(43) Veröffentlichungstag der Anmeldung: **05.12.2012**
(21) Anmeldenummer: 12168861.8
(22) Anmeldetag: 22.05.2012
(51) Int. Cl.: G06Q 10/08, H04L 29/08

(54) **Vorrichtung zur computergestützten Automatisierung einer Bibliothek**

(30) Priorität: 01.06.2011 CH 9512011
(71) Anmelder: Bibliotheca RFID Library Systems AG, 6343 Rotreuz (CH)
(72) Erfinder: Kessler, Timo, 6332 Hagendorn (CH); Ehrle, Thomas, 6343 Risch (CH)
(74) Vertreter: Rentsch Partner AG

(57) **Zusammenfassung**

Bei einer Vorrichtung zur computergestützen Automatisierung einer Bibliothek mit ausleihbaren Medien 50), welche jeweils mit einem RFID-Tag (51) versehen sind, in denen jeweils eine Signatur und ein von einem Sicherheitssystem abgefragtes Sicherheitsbit gespeichert sind, sind ein Lesegerät zum Lesen der Signatur und des Sicherheitsbits, ein Schreibgerät zum Verändern des Sicherheitsbits, eine Datenbank (80), eine Anzeigevorrichtung, eine Eingabevorrichtung und eine mit dem Lesegerät, dem Schreibgerät, der Anzeigevorrichtung, der Eingabevorrichtung und der Datenbank (80) verbundene Verarbeitungseinheit (70) vorhanden. Um die genannten Vorrichtungen unter Ausnutzung neuer technischer Möglichkeiten weiter zu verbessern und noch effizienter und anwendungsfreundticher zu machen ist erfindungsgemäss vorgesehen, dass als Schreib- und Lesegerät sowie als Anzeige- und Eingabevorrichtung ein NFC- sowie WLAN-fähiges Mobiltelefon (30) dient, Dabei erfolgt die Kommunikation zwischen dem Mobiltelefon (30) und den RIFID-Tags (51) drahtlos über eine NFC-Verbindung (90) und die Kommunikation zwischen dem Mobiltelefon (30) und der Verarbeitungseinheit (70) ebenfalls drahtlos über ein im Bibliotheksbereich aktives, drahtloses Funknetz WLAN (10).

## Beschreibung

### TECHNISCHES GEBIET

Die vorliegende Erfindung betrifft eine Vorrichtung zur computergestützen Automatisierung einer Bibliothek mit ausleihbaren Medien, welche jeweils mit einem RFID-Tag versehen sind, in denen jeweils eine Signatur und ein von einem Sicherheitssystem abgefragtes Sicherheitsbit gespeichert sind und wobei die Vorrichtung ein Lesegerät zum Lesen der Signatur und des Sicherheitsbils, ein Schreibgerät zum Verändern des Sicherheitsbits, eine Datenbank, eine Anzeigevorrichtung, eine Eingabevorrichtung, und eine mit dem Lesegerät, dem Schreibgerät, der Anzeigevorrichtung, der Eingabevorrichtung und der Datenbank verbundene Verarbeitungseinheit umfasst.

### STAND DER TECHNIK

Vorrichtungen dieser Art sind bekannt und in vielen Bibliotheken weltweit im Einsatz. Dabei sind die Schreib- und Lesegeräte sowie die Anzeige- und Eingabevorrichtungen in verhälinismässig grossen und schweren Stationen integriert, die auch die Verarbeitungseinheiten enthalten und für die Benutzer der Bibliothek zugänglich ortsfest aufgestellt sind. Meist sind mehrere solcher sogenannten Checkout-Stationen vorhanden und mit einer zentralen Datenbank verbunden. Die Benutzer der Bibliothek müssen, wenn sie ein Medium wie beispielsweise ein Buch ausleihen wollen, mit diesem von seinem Standort in der Bibliothek zu einer der Checkout-Stationen gehen, wo sie sich mit einer automatisch lesbaren Benutzkarte als Berechtigte ausweisen müssen und dann erfahren, ob das Buch zur Ausleihe verfügbar ist. Im positiven Falle können sie das Medium auschecken, wobei es in der Datenbank als für sie ausgeliehen vermerkt wird. Zusätzlich wird das Sicherheitsbit im RFID-Tag des Mediums deaktiviert, so dass durch das Sicherheitssystem der Bibliothek beispielsweise an einem überwachten Ausgang kein Alarm ausgelöst wird.

### DARSTELLUNG DER ERFINDUNG

Aufgabe der vorliegenden Erfindung ist es, die genannten Vorrichtungen unter Ausnutzung neuer technischer Möglichkeiten weiter zu verbessern und noch effizienter und anwendungsfreundlicher zu machen. Dieser Aufgabe wir gelöst durch Merkmale des Patentanspruchs 1. Danach ist die Erfindung dadurch gekennzeichnet, dass als Schreib- und Lesegerät sowie als Anzeige- und Eingabevorrichtung ein NFC- sowie WLAN-fähiges Mobiltelefon dient, wobei die Kommunikation zwischen dem Mobiltelefon und den RIFID-Tags drahtlos über eine NFC-Verbindung und die Kommunikation zwischen dem Mobiltelefon und der Verarbeitungseinheit ebenfalls drahtlos über ein im Bibliotheksbereich aktives, lokales Funknetz WLAN erfolgt.

Die Vorteile der Erfindung sind insbesondere darin zu sehen, dass als Mobiltelefon ein im Besitz des jeweiligen Benutzers befindliches privates, handelsübliches Mobiltelefon vewendet werden kann. Dadurch entfällt für die Bibliothek gegebenenfalls die Notwendigkeit, die erwähnten Checkout-Stationen aufzustehen und verfügbar zu harten. Zumindest kann deren Anzahl reduziert werden. Weiter kann die Überprüfung der Verfügbarkeit eines Mediums direkt an seinem jeweiligen Standort ausgeführt werden. Das Medium muss dazu nicht über einen gegebenenfalls längeren Weg durch die Bibliothek bis zu einer ortsfesten Checkout-Station mitgenommen und bei Nicht-Verfügbarkeit zu seinem Standort wieder zurückgebracht werden.

Vorteilhafte und dadurch bevorzugte Ausgestaltungen der Erfindung sind in den abhängigen Ansprüchen gekennzeichnet.

Danach ist es zunächst bevorzugt, dass die Verarbeitungseinheit multiuser-fähig ist und mit mehreren Mobiltelefonen gleichzeitig kommunizieren kann. Mehrere Benutzer können in diesem Fall unabhängig voneinander gleichzeitig an verschiedenen Orten in der Bibliothek Medien überprüfen und/oder auschecken. Wartezeiten an fest installierten Checkout-Stationen können dadurch vermieden oder reduziert werden. Ausserdem genügt es in diesem Falle gegebenenfalls, nur eine einzige Verarbeitungseinheit zur Verfügung zu stellen anstelle je eine solche Einheit pro Checkout-Station.

Zur Sicherung der drahtlosen Verbindung zwischen den Mobiltelefonen und der Verarbeitungseinheit über das lokale Funknetz WLAN können mehrere Massnahmen, alternativ oder in verschiedenen Kombinationen miteinander, getroffen werden. Beispielsweise kann das WLAN als "unsichtbar" eingestellt werden. Es ist dann für WLAN-fähige Geräte in seinem Funkbereich nicht sichtbar. Um eine Verbindung über das lokale Funknetz WLAN aufzubauen muss in diesem Fall die SSID des lokalen Funknetzes WLANs bekannt sein und übertragen werden. Auch kann das lokale Funknetz WLAN mit einem Netzwerkpasswort geschützt sein. Weiter muss für eine Verbindung mit der Verarbeitungseinheit, wenn diese in einem lokalen Netzwerk integriert und über dieses mit der Datenbank verbunden ist, die URL der Verarbeitungseinheit in diesem Netzwerk bekannt sein und ebenfalls übertragen werden. Schliesslich kann zum Einloggen in die Verarbeitungseinheit noch eine Benutzerkennung und ein Benutzerpasswort vorgesehen sein. Für nichtberechtigte Personen ist damit ein Zugriff auf die Verarbeitungseinheit und über diese auf die Datenbank praktisch unmöglich.

Die genannten, für den Zugriff auf die Verarbeitungseinheit erforderlichen Daten, mit Ausnahme gegebenenfalls des Benutzerpassworts, können im Mobiltelefon gespeichert sein.

Um das gleiche Mobiltelefon in unterschiedlichen Bibliotheken, die mit einer Vorrichtung der erfindungsgemässen Art ausgerüstet sind, verwenden zu können, kann zusätzlich eine Kennung wie z.B. ein öffentlicher Schlüssel der Bibliothek vorgesehen sein, der im Mobiltelefon ebenfalls gespeichert und von diesem mit gesendet wird.

Die Mobiltelefone können als Teile der erfindungsgemässen Vorrichtung von der Bibliothek zur Verfügung gestellt werden. Vorzugsweise kommen jedoch Mobiltelefone im Rahmen der Erfindung zum Einsatz, die im privaten Besitz der einzelnen Benutzer sind.

Üblicherweise werden von Bibliotheken Benutzerkarten an die Benutzer ausgegeben, mit denen sich diese ausweisen und ihre Berechtigung zur Benutzung der Bibliothek und zur Ausleihe von Medien belegen können. Im Rahmen der Erfindung können mit besonderem Vorteil Benutzerkarten Verwendung finden, die mit einem RFID-Chip versehen sind. Unter Verwendung des NDEF-Datenformats können in diesem Fall alle vorgenannten und für den Zugriff auf die Verarbeitungseinheit und auf die zentrale Datenbank der Bibliothek erforderlichen Daten auf der Benutzerkarte gespeichert werden. Per NFC-Verbindung ist es dann möglich, diese Daten von der Benutzerkarte auf das Mobiltelefon zu übertragen. Dies kann bei jedem Zugriff erfolgen. Vorzugsweise genügt es jedoch, dies nur einmal auszuführen und die Zugriffsdaten permanent im Mobiltelefon zu speichern. Die Benutzerkarten wird nach diesem Gebrauch möglicherweise gar nicht benötigt und muss beim Bibliotheksbesuch nicht mehr mitgeführt werden.

Weiter vorzugsweise ist auf dem Mobiltelefon ein Applikationsprogramm geladen, das die Kommunikation mit den RFID-Tags und der Verarbeitungseinheit insbesondere menugeführt unterstützt. Mobiltelefone mit berührungsempfindlichen Displays, sogenannten Touchscreens, sind hierbei von besonderem Vorteil und besonders einfach zu bedienen.

Das Applikationsprogramm kann einfach sein. Insbesondere braucht und sollte auch aus Sicherheitsgründen keine Dekodierung der ggf. gespeicherten persönlichen Daten einschliesslich der Benutzerkennung und/oder der jeweils gelesenen Signaturen durch das Applikationsprogramm erfolgen. Das Applikationsprogramm gibt damit nur codierte Daten an die Verarbeitungseinheit weiter, durch welche sie erst unter Zugriff auf die Datenbank dekoriert und in verständliche Form lediglich zwecks Anzeige an das Applikationsprogramm und damit das Mobiltelefon übertragen werden.

Der Begriff Mobiltelefon soll hier so verstanden werden, dass er auch andere, transportable, WLAN- und NFC-fähige Geräte umfasst, wie beispielsweise Notebook-Computer. Palmtop-Computer, Tablet-Computer etc., auf denen ein Applikationsprogramm der hierin beschrieben Art geladen und ausgeführt werden kann und die mit einem lokalen Funknetz sowie mit RFID-Tags über eine NFC-Verbindung kommunizieren können.

### KURZE BESCHREIBUNG DER ZEICHNUNGEN

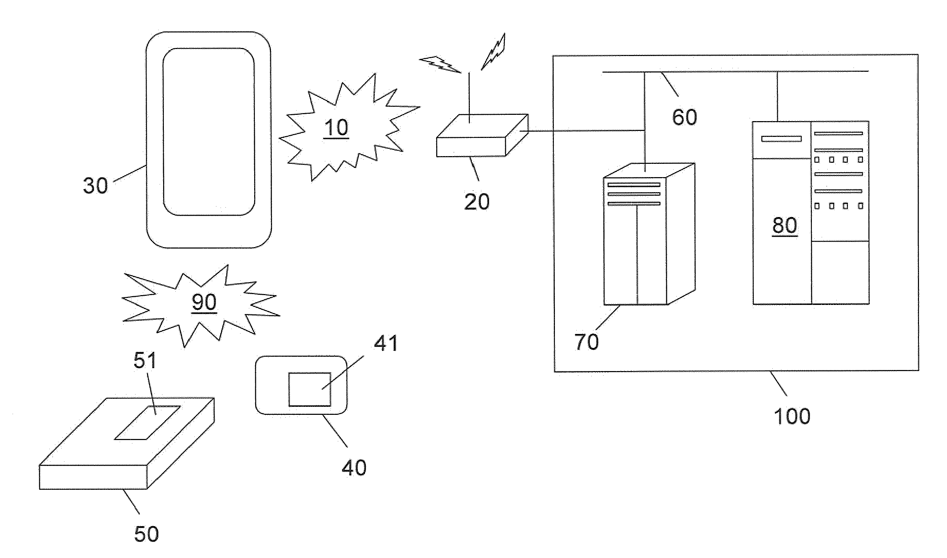

Die Zeichnung zeigt in einer einzigen Figur eine schematische Darstelllung einer erfindungsgemässen Vorrichtung.

### WEGE ZUR AUSFÜHRUNG DER ERFINDUNG

Die in der Zeichnung dargestellte Vorrichtung umfasst im Sende- und Empfangsbereich eines lokalen Funknetzes WLAN 10 mit einer Sende-und Empfangsstation 20 ein WLANsowie NFC-fähiges Mobiltelefon 30, in dessen Nahbereich eine Benutzerkarten 40 sowie ein Buch 50 vorhanden sind. Die Benutzkarte 40 ist mit einem RFID-Tag 41 versehen und ansonsten von der Art, wie sie üblicherweise von Bibliotheken an ihrer Benutzer als Identifikations- und Berechtigungskarte ausgegeben wird. Das Buch 50 ist lediglich ein Beispiel für die in der Bibliothek vorhandenen, unterschiedlichen Medien, die zur Ausleihe zur Verfügung stehen. Es könnte sich hierbei auch um einen digitalen Datenträger wie beispielsweise eine Compact Disc handeln. Das Buch 50 ist ebenfalls mit einem RFID-Tag 51 versehen.

Die Sende- und Empfangsstation 20 des WLAN 10 steht über ein vorzugsweise drahtgebundenes lokales Netzwerk 60 mit einer Verarbeitungseinheit 70 in Form eines Applikationsservers in Verbindung, der wiederum über das lokale Netzwerk 60 mit einem weiteren Server verbunden ist. Auf diesem Server ist ein Bibliotheksverwaltungsprogramm mit einer Datenbank 80 installiert.

Das Mobiltelefon 30 kann über das lokale Funknetz WLAN 10 mit der Verarbeitungseinheit 70 kommunizieren und über eine NFC-Verbindung 90 in seinem Nahbereich mit den RFID-Tags 41 und 51. Während sich das WLAN 10 über den gesamten Bibliotheksbereich erstreckt, beträgt die Reichweite der NFC-Verbindung 90 nur wenige Zentimeter.

Das Mobiltelefon 30, die Benutzerkarten 40 und das Buch 50 stehen hier lediglich beispielhaft für eine möglicherweise grössere Anzahl solcher Einheiten. Sind mehrere Mobiltelefone 30 vorhanden, sollen diese parallel zueinander über das WLAN 10 und das lokale Netzwerk 60 mit der Verarbeitungseinheit 70 und über diese mit der Datenbank 80 kommunizieren können. Das lokale Funknetz WLAN 10, das lokale Netzwerk 60, die Verarbeitungseinheit 70 und die Datenbank 80 müssen dazu multi-user-fähig sein. Das Mobiltelefon 30 soll darüberhinaus, wenn auch nicht gleichzeitig, mit den RFID-Tags von verschiedenen Benutzerkarten 40 und Büchern 50 oder andersartigen Medien kommunizieren können.

Die Verarbeitungseinheit 70 bzw. der Applikationsserver und der Server mit der Datenbank 80 sind vorzugsweise in einem geschützten, nicht frei zugänglichen Bereich 100 der Bibliothek aufgestellt. Zudem sollte die Verarbeitungseinheit 70 anders als über das lokale Funknetz WLAN 10 von ausserhalb dieses geschützten Bereichs 100 für eine Datenkommunikation nicht zugänglich sein.

Bei der erfindungsgemässen Vorrichtung dient das Mobiltelefon 30 als Schreib- und Lesegerät der INhalte von RFID-Tags sowie als Anzeige- und Eingabevorrichtung für alle Operationen, die insbesondere für das Ausleihen beispielsweise des Buchs 50 ausgeführt werden müssen. Bei dem Mobiltelefon 30 soll es sich um ein im persönlichen Besitz des Benutzers befindliches, handelsübliches, WLAN- sowie NFC-fähiges Gerät handeln.

Auf dem Mobiltelefon 30 ist ein Applikationsprogramm installiert, das die Kommunikation mit den RFID-Tags 41, 51 einerseits und der Verarbeitungseinheit 70 andererseits unterstützt.

Zur Herstellung einer Verbindung zwischen dem Mobiltelefon 30 und der Verarbeitungseinheit 70 über das lokale Funknetz WLAN 10 und das lokale Netzwerk 60 wird die SSID des WLAN 10, d.h. der Name dieses Funknetzes, sowie die URL des Applikationsservers 70 im lokalen Netzwerk 60 benötigt. Bei der erfindungsgemässen Vorrichtung ist das lokale Funknetz WLAN 10 für WLAN-fähige Geräte als "unsichtbar" eingestellt, so dass die SSID nicht übertragen wird. Diese wird dem Benutzer von der Bibliothek mitgeteilt. Entsprechendes gilt für die URL der Verarbeitungseinheit 70 im lokalen Netzwerk 60. Zusätzlich wird für einen Verbindungsaufbau noch ein Netzwerkpasswort für das lokale Funknetz WLAN 10 sowie eine Benutzerkennung und ein Benutzerpasswort für die Verarbeitungseinheit benötigt. Auch diese Daten werden dem Benutzer von der Bibliothek zur Verfügung gestellt.

Die im Folgenden auch Zugriffsdaten genannten Daten könnten dem Benutzer schriftlich mitgeteilt und dann von diesem "von Hand" über die Eingabevorrichtung des Mobiltelefons 30 (z.B. Tastatur bzw. über das Display bei Vorhandensein eines Touchscreens) eingeben werden. Vorzugsweise werden die Zugriffsdaten jedoch, mit Ausnahme sinnvollerweise des Benutzerpassworts, von der Bibliothek elektronisch im RFID-Tag 51 der an den Benutzer ausgegebenen Benutzerkarte 50 gespeichert. Über die NFC-Verbindung 90 kann der Benutzer die Daten in diesem Fall elektronisch von seiner Benutzkarte 50 auslesen und auf das Mobiltelefon 30 übertragen. Zum Verbindungsaufbau mit der Verarbeitungseinheit 70 muss er lediglich noch sein Benutzerpasswort "von Hand" eingeben.

RFID-Tags wie das RFID-Tag 51 und wie sie für die Masse an ausleihbaren Medien verwendet werden, entsprechen üblicherweise dem Standard ISO 15693. Gemäss diesem Standard kann im RFID-Tag neben einem Sicherheitsbit insbesondere medienspezifische Daten gespeichert werden, beispielsweise die für den Standort in der Bibliothek und ihre Ausleihe übliche Signatur. Um die mehreren, für den Zugriff auf den Applikationsserver erforderlichen Daten aufnehmen zu können, ist für das RFID-Tag 41 der Benutzerkarte 40 das Datenformat gemäss dem Standard NDEF verwendet, das für die Speicherung von diesen Daten besser geeignet ist.

Zum Einlesen der Zugriffsdaten von der Benutzerkarte 40 muss das Applikationsprogramm auf dem Mobiltelefon 30 gestartet sein, wobei davon auszugehen ist, dass dies in der Regel nicht der Fall sein wird. Der Programmstart kann durch den Benutzer "von Hand" initiiert werden. Es kann aber auch vorgesehen sein, dass das Applikationsprogramm automatisch gestartet wird, sobald vom Mobiltelefon 30 über die NFC-Verbindung 90 die Anwesenheit einer Benutzerkarte 40 in der nahen Umgebung detektiert wird.

Es kann vorgesehen sein, dass die Zugriffsdaten bei jedem einzelnen Zugriff auf das Mobiltelefon 30 übertragen werden müssen. Vorzugsweise werden sie im Applikationsprogramm des Mobiltelefons 30 jedoch gespeichert, so dass es genügt, sie beispielsweise nur einmal vom RFID-Tag 41 der Benutzerkarte 40 einzulesen.

Es kann weiterhin vorgesehen sein, auf einem Mobiltelefon 30 im Applikationsprogramm die Zugriffsdaten mehrerer Bibliotheken abzuspeichern. Die einzelnen zusammengehörigen Datensätze können dabei in mehreren sogenannten Benutzerprofilen abgelegt sein. Um diese Profile voneinander zu unterscheiden, können die Zugriffsdaten um ein weiteres Datum bzw. Kennzeichen, insbesondere um einen öffentlichen Schlüssel der jeweiligen Bibliothek, ergänzt sein, der von dem Mobiltelefon 30 bei jedem Zugriff auf die Verarbeitungseinheit 70 auch mit gesendet wird. Möglich ist auch die Speicherung unterschiedlicher Profile für verschiedene Benutzer desselben Mobiltelefons 30.

Zur Erhöhung der Sicherheit der Zugriffsdaten werden diese im Mobiltelefon 30 von dem Applikationsprogramm nicht dekodiert und auch nicht angezeigt, sondern unverändert an den Applikationsserver 70 übertragen. Erst dieser verfiziert die Daten und verknüpft sie mit verständlichen und für den jeweiligen Vorgang relevanten Inhalten aus der Datenbank 80.

Um das Buch 50 aus der Bibliothek auszuleihen, startet der Benutzer in der Bibliothek das Applikationsprogramm auf seinem Mobiltelefon 30. Wie vorstehend bei der Benutzerkarte 40 kann auch vorgesehen sein, dass das Applikationsprogramm automatisch gestartet wird, sobald vom Mobiltelefon 30 über die NFC-Verbindung 90 die Anwesenheit des Buches 50 in der nahen Umgebung detektiert wird. Bei Vorhandensein mehrerer Profile gegebenenfalls unterschiedlicher Bibliotheken und/oder Benutzer wählt der Benutzer dann zunächst das zutreffende Profile aus und gibt das jeweilige Benutzerpasswort ein. Danach nimmt das Mobiltelefon 30 mit der Verarbeitungseinheit 70 der Bibliothek Verbindung auf. Kommt diese zustande, wird unter Zugriff auf die Datenbank 80 die Identität und Berechtigung des Benutzers zur Nutzung der Bibliothek und zum Ausleihen überprüft. Bei positivem Ergebnis wird der Benutzer aufgefordert, das Mobiltelefon 30 in der Nähe des von ihm zur Ausleihe gewünschten Buches 50 zu bringen. Sobald das RFID-Tag 51 des Buches 50 über die NFC-Verbindung 90 durch das Mobiltelefon 30 erkannt wird, wird durch erneute Anfrage der Datenbank 80 überprüft, ob das Buch 50 zur Ausleihe verfügbar ist. Bei positivem Ergebnis wird dies dem Benutzer auf dem Mobiltelefon 30 angezeigt, wobei zusätzlich nützliche Informationen über das Buch angezeigt werden können. Der Benutzer kann daraufhin die Ausleihe bestätigen, wonach das Buch 50 in der Datenbank 80 als durch ihn ausgeliehen eingetragen wird. Zudem wird über die NFC-Verbindung 90 das Sicherheitsbit im RFID-Tag 51 des Buches 50 durch einen Schreibvorgang deaktiviert, so dass das Sicherheitssystem der Bibliothek keinen Alarm auslöst, wenn der Benutzer die Bibliothek mit dem Buch 50 verlässt.

Angezeigt kann werden können dem Benutzer auch Information zu den Ausleihbedingungen wie insbesondere bezüglich der Ausleihfrist. Der Benutzer kann durch das Applikationsprogramm auch an den Ablauf oder nahen Ablauf dieser Frist erinnert werden.

Im negativen Fall, wenn das Buch 50 beispielsweise für einen Dritten reserviert ist, kann dies dem Benutzer ebenfalls angezeigt werden. Dem Benutzer kann dann die Möglichkeit geboten werden, das Buch 50 für sich zu reservieren. Bei einem späteren Besuch der Bibliothek kann, wenn das Mobiltelefon wieder Verbindung zum Applikationsserver 70 erhält, dem Benutzer angezeigt werden, dass ein zuvor von ihm reserviertes Buch 50 nunmehr zur Ausleihe verfügbar ist.

### BEZUGSZEICHENLISTE

- 10: lokales Funknetzes WLAN
- 20: Sende-und Empfangsstation
- 30: WLAN- sowie NFC-fähiges Mobiltelefon
- 40: Benutzerkarte
- 41: RFID-Tag 41
- 50: Buch
- 51: RFID-Tag
- 60: lokales Netzwerk
- 70: Verarbeitungseinheit /Applikationsserver
- 80: Datenbank/Server
- 90: NFC-Verbindung
- 100: nicht frei zugänglicher Bereich

## Patentansprüche

1. Vorrichtung zur computergestützen Automatisierung einer Bibliothek mit ausleihbaren Medien (50), welche jeweils mit einem RFID-Tag (51) versehen sind, in denen jeweils eine Signatur und ein von einem Sicherheitssystem abgefragtes Sicherheitsbit gespeichert sind,
und wobei weiter vorhanden sind:
ein Lesegerät zum Lesen der Signatur und des Sicherheitsbits,
ein Schreibgerät zum Verändern des Sicherheitsbits,
eine Datenbank (80),
eine Anzeigevorrichtung,
eine Eingabevorrichtung, und
eine mit dem Lesegerät, dem Schreibgerät, der Anzeigevorrichtung, der Eingabevorrichtung und der Datenbank verbundene Verarbeitungseinheit (70),
**dadurch gekennzeichnet,**
**dass** als Schreib- und Lesegerät sowie als Anzeige- und Eingabevorrichtung ein NFC- sowie WLAN-fähiges Mobiltelefon(30) dient,
wobei die Kommunikation zwischen dem Mobiltelefon (30) und den RIFID-Tags (51) drahtlos über eine NFC-Verbindung (90) und die Kommunikation zwischen dem Mobiltelefon (30) und der Verarbeitungseinheit (70) ebenfalls drahtlos über ein im Bibliotheksbereich aktives, lokales Funknetz WLAN (10) erfolgt.

2. Vorrichtung nach Anspruch 1, **dadurch gekennzeichnet, dass** die Verarbeitungseinheit (70) multiuser-fähig ist und mit mehreren Mobiltelefonen (30) gleichzeitig kommunizieren kann.

3. Vorrichtung nach Anspruch 1 oder 2, **dadurch gekennzeichnet, dass** das lokale Funknetz WLAN (10) als "unsichtbar" eingestellt ist.

4. Vorrichtung nach einem der Ansprüche 1 - 3, **dadurch gekennzeichnet, dass** für einen Zugriff mit einem Mobiltelefon (30) auf die Verarbeitungseinheit (70) vom Mobiltelefon (30) folgende Daten gesendet werden: die SSID des lokalen Funknetzes WLAN (10), ein Netzwerkpasswort für das lokalen Funknetzes WLAN (10), die URL der Verarbeitungseinheit (70) in einem lokalen Netzwerk (60), eine Benutzerkennung und ein Benutzerpasswort.

5. Vorrichtung nach einem der Anspruch 4, **dadurch gekennzeichnet, dass** bei einem Zugriff mit einem Mobiltelefon (30) auf die Verarbeitungseinheit (70) vom Mobiltelefon (30) zusätzlich eine Kennung der Bibliothek gesendet wird.

6. Vorrichtung nach einem der Ansprüche 4 oder 5, **dadurch gekennzeichnet, dass** die genannten Daten, mit Ausnahme gegebenenfalls des Benutzerpassworts, im Mobiltelefon (30) gespeichert sind.

7. Vorrichtung nach einem der Ansprüche 4 - 6, **dadurch gekennzeichnet, dass** die genannten Daten, mit Ausnahme gegebenenfalls des Benutzerpassworts, in einer mit einem RFID-Tag (41) versehenen Benutzerkarte (40) gespeichert und von dort drahtlos über eine NFC-Verbindung (90) auf das Mobiltelefon (30) übertragbar sind.

8. Vorrichtung nach Anspruch 7, **dadurch gekennzeichnet, dass** die RFID-Tags (41) der Benutzerkarten (40) dem Standard NDEF entsprechen.

9. Vorrichtung nach einem der Ansprüche 1 - 8, **dadurch gekennzeichnet, dass** auf dem Mobiltelefon (30) ein Applikationsprogramm geladen ist, das die Kommunikation mit den RFID-Tags (41, 51) und der Verarbeitungseinheit (70) unterstützt.

10. Vorrichtung nach Anspruch 9, **dadurch gekennzeichnet, dass** durch das Applikationsprogramm keine Dekodierung der Benutzerkennung und/oder der Signatur erfolgt.
